# EUROPEAN PATENT SPECIFICATION

(11) **EP 2 045 140 B1**
(45) Date of publication and mention of the grant of the patent: **27.01.2010**
(21) Application number: 07019283.6
(22) Date of filing: 01.10.2007
(51) Int. Cl.: B60R 16/037

(54) **Adjustment of vehicular elements by speech control**
Sprachgesteuerte Einstellung von Fahrzeugteilen
Réglage d'éléments véhiculaires par contrôle vocal

(43) Date of publication of application: 08.04.2009
(73) Proprietor: Harman Becker Automotive Systems GmbH, 76303 Karlsbad (DE)
(72) Inventor: Buck, Markus, 88400 Biberach (DE); Haulick, Tim, 89143 Blaubeuren (DE); Schmidt, Gerhard Uwe, 89081 Ulm (DE)
(74) Representative: Grünecker, Kinkeldey, Stockmair & Schwanhäusser Anwaltssozietät

(56) References cited:
- EP-A- 0 094 449
- EP-A- 0 488 733
- WO-A-2004/086360
- US-A- 4 593 403

## Description

### Field of Invention

The present invention relates to the control of vehicular elements and, in particular, to the automatic adjustment of elements provided inside or outside a vehicular cabin by means of a speech control system.

### Background of the invention

The passengers of vehicles, in particular, drivers have to operate different apparatus and cabin elements as, e.g., operating controls, mirrors, displays and navigation and entertainment systems, before the start of a travel and also while traveling. Displays and mirrors, e.g., have to be adjusted to the viewing angle of the driver and/or the other passengers.

WO 2004/086360 A1 discloses a speaker-dependent voice recognition method involving the use of a voice recognition system, during which voice utterances of the user are trained, and commands are assigned to the trained voice utterances.

The vehicular cabin elements (inside or outside the vehicular cabin) are usually manipulated by hand. Given the increasing number of elements to be handled, restriction to manual operation is more and more considered uncomfortable. Moreover, the need or desire for manipulating different devices during the travel distracts the driver's attention thereby increasing the risk of accidents, in particular, in the case of car drives in urban areas. Mechanically complex adjustments, e.g., adjusting a driver's seat, and semantically demanding adjustments or settings, e.g., the setting of a destination in a navigation system, are laborious. The consumer's acceptance of different adjustment aids and electronically assistant means is affected by to many operation steps that are necessary in present devices.

In recent years employment of servo-motors for actuating cabin elements as seats, windows, and mirrors became prevalent in higher-class automobiles as well as in ships and boats. Manipulating by crank handles and manual turning is partly replaced by pressing or touching buttons that initiate operation by servo-motors.

However, each time a user wants a cabin element to be re-adjusted, e.g., due to slight positional changes, he has to operate the buttons in order to have the servo-motors to adjust the respective cabin element. Moreover, if different drivers use the same vehicle at different times, particular adjustments, e.g., the inclination and height of a driver's seat chosen by one of the possible drivers are almost necessarily inappropriate for a different one.

Consequently, there is still a need for a more comfortable and safer adjustment of vehicular elements, in particular, of those elements that assist the driver in navigating and making him and/or other passengers comfortable when driving a vehicle. It is therefore an object of the present invention to provide a comfortable and reliable control and manipulation of vehicular elements.

### Description of the Invention

The above-mentioned object is achieved by the method for setting up automatic adjustment of at least one vehicular element according to claim 1. The object is also achieved by the system for automatic adjustment of at least one vehicular element according to claim 9.

The herein disclosed method for setting up automatic adjustment of at least one vehicular element comprises the steps of
recognizing a first code phrase uttered by a user by a speech recognition means;
operating the at least one vehicular element for adjustment by the user;
recognizing a second code phrase uttered by the user by the speech recognition means;
upon recognition of the second code phrase storing mechanical and/or electronic operations comprised in the step of operating the at least one vehicular element for adjustment and/or adjustment parameters obtained after completion of the step of operating the at least one vehicular element for adjustment;
recognizing a third code phrase uttered by the user by the speech recognition means upon completion of the step of storing the mechanical and/or electronic operations and/or the adjustment parameters; and
storing the third code phrase for identification of the stored mechanical and/or electronic operations and/or the adjustment parameters.

The vehicular element can be a mechanical element, e.g., a seat or a mirror, or an electronic device, e.g., an electronic audio device, in particular, a radio or a CD player, or a navigation system installed in the vehicle. The vehicular element can, e.g., be a heating or an air condition or any other element provided inside or outside the vehicle. The vehicle can, in particular, be an automobile, a motorbike, or an airplane or a boat. Operation of the vehicular element may comprise mechanical manipulation or the input of some setting, e. g., tuning in to a particular channel and/or adjusting the volume and/or adjusting the treble and/or bass and/or balance. An operation may be initiated/caused by manually pushing a control button (e.g., a seat control) or by voice control, e.g., selecting a radio channel by command-and-control.

According to the above-mentioned methods, automatic adjustment of one or more vehicular elements can be facilitated. Employment of a speech recognition (and control) means allows for an easy and comfortable setting-up of a variety of adjustments (device settings) that can be stored and subsequently retrieved (again by voice). The first code phrase is used to initiate monitoring and buffering of operations that are to follow for the desired adjustments. For example, a user (e.g., a driver of an automobile) enters a car and wants to adjust the driver's seat and, in particular, wants the final adjustment parameters (height and inclination of the seat) to be stored such that they can be retrieved when he re-enters the vehicle in the future. He may utter a first code phrase like "Start recording" or "Initiate adjustment", etc.

In response to the recognized first code phrase the subsequent operations initiated by the user are monitored and recorded. The user may now adjust the seat by means of switches that control actuators for electronically mediated adjustment of the seat. The adjustment parameters after completion of the adjustment operation can be stored in response to the second code phrase uttered by the user (e.g., "Adjustment completed").

The adjustment parameters and the necessary operations to achieve them can be stored in a data file. The necessary operations stored may include control signals supplied to servo-motors or actuators that vehicular elements are provided with, a frequency tuning module, the destination setting means of a navigation system, etc. for adjustment/setting of the vehicular element. Storage of the data file can be caused/controlled by the speech recognition and control means that is installed in the vehicle and used for the implementation of the above-mentioned methods. The user has to utter a third code phrase to tag the data file, i.e. to add a verbal identifier for the data file (the stored adjustment parameters and the necessary operations). The user may be prompted, e.g., by a synthesized speech output, to utter the third code phrase (e.g., "Seat adjustment").

When the user enters the vehicle in the future he is enabled to cause the desired adjustment, e.g., the adjustment of the height and inclination of the seat, by utterance of the third code phrase (possibly after activating the speech recognition and control means and/or switching the speech recognition and control means to an appropriate operation mode).

It is advantageous to adjust more than one vehicular element and to store the corresponding adjustment parameters and/or mechanical/electronic operations in one data file. For example, a user may adjust a seat, mirrors and a radio after utterance of the first code phrase. All adjustment operations are monitored (by a car bus system) and recorded and stored in a tagged data file in response to the second and third code phrases. Thus, the user is enabled to cause automatic adjustment of a variety of vehicular elements by means of the third code phrase (e.g., simply representing the name of the user), when he enters the vehicle in the future. Thereby, the comfort of the user is greatly enhanced.

As already described above the at least one vehicular element can be an electronic device that is to be automatically adjusted by an embodiment of the inventive methods. In particular, the electronic device can be a vehicle navigation system. Thus, according to an embodiment in the above-described methods the vehicular element is a navigation system and the operating for adjustment of the navigation system comprises inputting at least one destination or inputting at least one destination and calculating a route to the destination (e.g., from the present location or one or more start locations input by the user) and adjustment parameters stored after completion of the step of operating the navigation system comprise the at least one input destination or the at least one input destination and the calculated route. In particular, the inputting of the at least one destination comprises (or consists of) uttering the name of the at least one destination by the user.

Thus, an individual user can retrieve an already stored destination and a route to the destination. This is particularly useful in case in that different drivers using the same vehicle at different times for driving the same route, for instance.

The system for automatic adjustment of at least one vehicular element according to claim 9 comprises
a speech recognition means;
a control means connected with the speech recognition means;
actuating means connected with the control means and at least one vehicular element;
a bus system connecting at least the speech recognition means and the actuating means;
wherein the speech recognition means is configured to
recognize a first code phrase;
open a data file and monitor the bus system in response to the recognized first code phrase;
recognize a second code phrase;
save to the data file monitored operations for adjustment of the at least one vehicular element and/or adjustment parameters obtained after completion of the adjustment of the at least one vehicular element in response to the recognized second code phrase;
output a prompt to a user;
recognize for a first time a third code phrase uttered by the user in response to the prompt;
tag the data file with the recognized third code phrase; and to
recognize for a second time the third code phrase; and
in response to the third code phrase recognized for a second time cause the control means to operate the actuating means on the basis of the data stored in the data file.

In the above system the at least one vehicular element can be a seat and/or a mirror and/or a heating and/or an air condition and/or an electronic audio device, in particular, a radio or a CD player, and/or a navigation system installed in the vehicle. In particular, the vehicular element can be a navigation system and the data stored in the data file can comprise at least one destination and/or a calculated route to the destination.

The control means may be integrated in the speech recognition means to constitute a speech recognition and control means. The third code phrase is used to identify the data file. The output can be prompted acoustically (e.g., by a synthesized speech output) or visually. If the at least one vehicular element is a mechanical element (as, e.g., a seat or a mirror), the actuating means can comprise an actuator or a servo-motor. If the at least one vehicular element is an electronic device, the actuating means may be an electronic means being part of the electronic device or may even by part of a computer program.

The present invention also provides a vehicle, in particular, an automobile comprising a system according to one of the above examples.

Additional features and advantages of the present invention will be described with reference to the drawings. In the description, reference is made to the accompanying figures that are meant to illustrate preferred embodiments of the invention. It is understood that such embodiments do not represent the full scope of the invention.
Figure 1 is a flow chart that illustrates steps of the herein disclosed method for automatic adjustment of vehicular elements including the step of recording adjustment parameters and file tagging.
Figure 2 is a flow chart that illustrates steps of the herein disclosed method for automatic adjustment of vehicular elements including the steps of recording adjustment parameters and a confirmation procedure by a user.
Figure 3 illustrates an example of the herein disclosed method for setting up a navigation system.

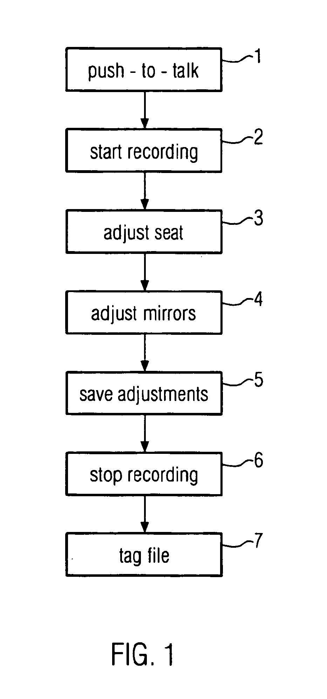

In the following examples, the above-described methods are described in some detail. In the example illustrated in Figure 1 a passenger of a vehicle (user), e.g., the driver of an automobile, activates a speech recognition and control means by a push-to-talk lever 1. The speech recognition and control means is installed in the vehicle and comprises microphones, e.g., a microphone array including a number of directional microphones. The user wants to adjust mirrors (driver side mirror and passenger side mirror) outside the vehicle, the inside rear view mirror and also the seat.

After activation 1 of the speech recognition and control means that is installed in the vehicle the user utters a code phrase (key phrase) to start a recording 2, e.g., "Start recording". A speech recognition unit recognizes the command and starts a recording procedure, e.g., by opening one or more files to be stored for future runs. Storing can be performed by any non-volatile memory means known in the art. The speech recognition and control means is connected via bus systems to electronic and mechanical adjustment means (actuators, servo-motors, etc.) used for adjusting mechanical and electronic elements and devices.

Next, the user adjusts 3 the seat, e.g., the driver seat, by manipulating levers or pushing buttons for electronic control. Then, he adjusts the driver side mirror and passenger side mirror outside the vehicular cabin as well as the inside rear view mirror 4. Adjustment of the mirrors 4 is usually carried out manually by hand or by pushing buttons for electronic control of the mirrors outside the cabin. The speech recognition and control means monitors and saves 5 the adjustments of the mirrors and the seat performed by the user, i. e. parameters as the inclination of the mirrors, height and inclination of the seat, etc. are stored 5.

Monitoring is made possible by the provision of bus lines connected with the speech recognition and control means, e.g., by common bus systems defining the Electrical Physical layer and/or the Optical Physical layer employed as, e.g., Media Oriented Systems Transport (MOST) and Controller Area Network (CAN) busses. These bus systems are also used for the automatic adjustment of vehicular elements according to previously stored adjustment parameters.

After the adjustments carried out by the user are completed, he utters a second code phrase for stopping the recording process 6, e.g., "Stop recording". The file(s) including the adjustment parameters is (are) closed and stored in a database. Subsequently, the file is tagged (identified) by a third code phrase for future retrieval. The user may tag the file including the adjustment parameters by uttering a phrase like "Store: Mirror and seat setting" or "Mirror and seat setting", for instance.

All adjustments performed by the user are stored in one or more files in form of parameters. The next time the user enters the vehicle he is enabled to initiate automatic adjustments of the mirrors and the seat by uttering the third code phrase, e.g., "Mirror and seat setting", or part of the third code phrase (e.g., without a command word like "store"). The speech recognition and control means may be able to identify different users by analyzing a speech input.

Speech waveforms may be sampled at a rate between 6.6 kHz and 20 kHz and may be derived from the short term power spectra and represent a sequence of characterizing vectors containing values of particular features/feature parameters. The speech recognition and control means may operate as known in the art and may make use of a concatenation of allophones that constitute a linguistic word. The allophones are typically represented by Hidden Markov Models (HMM) that are characterized by a sequence of states each of which has a well-defined transition probability. In order to recognize a spoken word, the systems have to compute the most likely sequence of states through the HMM. This calculation is usually performed by means of the Viterbi algorithm, which iteratively determines the most likely path through the associated trellis.

Individual characteristics of the voice of a speaker (user) can be stored and used for speaker identification. Thus, different users (drivers) may initiate automatic adjustment of vehicular elements by using similar or identical code phrases. Alternatively, the storing of the adjustment parameters may be caused by uttering a code phrase including the name of the user.

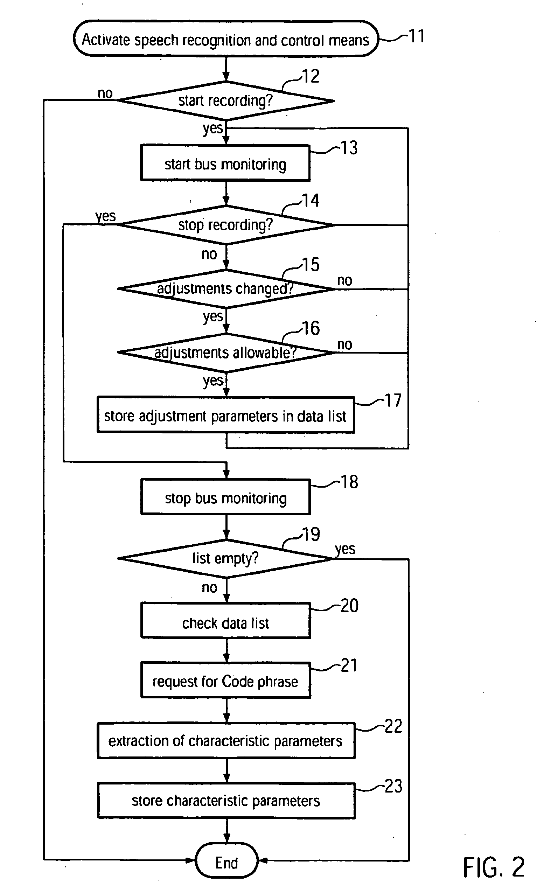

An example of the method for adjustment of vehicular elements by speech control is illustrated in Figure 2 in some more detail. A speech recognition and control means that is installed in an automobile is activated by a driver 11. Activation of the speech recognition and control means can be done by a push-to-talk lever/button or by the utterance of a keyword if the speech recognition and control means is in a standby-mode. After the activation it is decided 12 whether a recording should be started. Start of a recording can be initiated by the driver by uttering a code phrase or by manipulation of a switch or button. If a recording has to be started, monitoring of a bus system used for the operation of vehicular elements and connected with the speech recognition and control means is started 13.

The driver may now perform several adjustments of vehicular elements. For example, he may adjust mirrors and his seat as well as the heating. The adjustments are monitored 15 by means of the bus system and it is also determined whether the adjustments demanded by the driver are allowable 16. If it is determined that a vehicular element is adjusted by the driver within some allowable range, the adjustment is stored in a respective data list 17.

After the driver has completed all intended adjustments, the recording is stopped 14 and the monitoring of the bus system is also stopped 18. The driver may indicate that he has completed all intended adjustments by the utterance of an appropriate code phrase, for instance.

After the bus monitoring has been stopped 18 in step 19 of Figure 2 it is decided whether or not the stored data list is empty This could be the case, if the driver has only tried to adjust a vehicular element beyond some predetermined range (e.g., he might accidentally have tuned a radio in to a frequency on which no broadcasting channel is received). If the list has stored entries representing adjustment parameters, the data list is presented to the driver. Thus, the data list can be checked by the driver 20 and settings / adjustment parameters can be affirmed or manually modified by the driver. For instance, the driver may delete a particular list entry or he may change a set value for the volume of the radio, for instance, by means of some input device (keyboard, light pen, mouse, etc.).

After the driver has affirmed the presented data list and/or has completed modifications of entries of the data list, he is asked (e.g., by synthetic speech output) to input a code phrase 21 by which the data list is uniquely identified. His utterance of this code phrase is analyzed and recorded. Analysis of this code phrase includes the extraction of characteristic parameters 22. A feature analysis as known in the art might be performed to extract the characteristic parameters that shall be recognized by the speech recognition and control means when the driver utters the code phrase for automatically initiating the adjustments of vehicular elements in accordance with the adjustment parameters that are stored in the data list.

Characterizing vectors can be determined that can comprise the spectral content of the detected speech signal representing the driver's utterance of the code phrase. In particular, the characterizing vectors can be cepstral vectors. The cepstrum separates the glottal frequency from the vocal tract resonance. The cepstrum is obtained in two steps. A logarithmic power spectrum is calculated and on that an inverse Fourier transform is performed. The characterizing vectors may be derived from a short-term power spectrum. Usually the speech signal is divided into frames of some 10 to 20 ms duration. Characteristic feature parameters may comprise the power of a predetermined number, e.g., some 20, discrete frequencies that are of relevance for the identification of the string representation of a spoken speech signal.

The extracted characteristic parameters are stored 23 and linked to the data list that is identified by means of these parameters. The next time the driver utters the code phrase, recognition of this code phrase results in the desired automatic adjustment of vehicular elements.

Herein, adjustment of a vehicular element is meant to comprise setting parameters of electronic devices, e.g., tuning a car radio in to a channel and adjusting the volume. Moreover, the inventive method can advantageously be used for setting and using a navigation system that is installed in a vehicle.

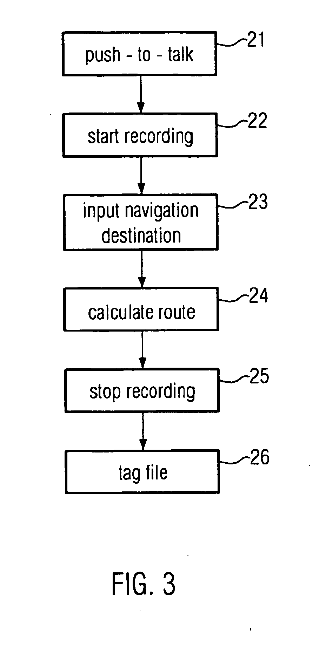

Consider a case in which a speech recognition and control means is connected with a navigation system installed in a vehicle. A user may enter the vehicle and wants to program the navigation system for guidance to a particular destination. As shown in the flow chart of Figure 3, he operates a push-to-talk lever 21 to activate the speech recognition and control means. He starts a recording operation 22 by uttering a first code phrase. Then, he inputs one or more destinations in the navigation system 23. Input of destinations may be performed by means of a keyboard or a pointing device (e.g., light pens, track balls) or by speech input. The navigation system may calculate a route 24 from the present location to the input destination(s). The user may also input one or more arbitrary starting points to initiate route calculation from the starting point(s) to the destination(s).

After he has completed the settings, the user utters a second code phrase (e.g., "Stop recording") to finish the recording of the settings of the navigation system 25. Then, he tags the file 26 (third code phrase) by uttering his name and one of the destinations he has previously input in the navigation system, for instance. The next time the user enters the vehicle, he is enabled to initiate guidance to a destination by the navigation system by simply uttering the third code phrase after he has activated the speech recognition and control means.

According to the present invention parameters for the adjustments / settings of a plurality of vehicular elements (mechanical elements as, e.g., mirrors and electronic elements and devices as a navigation system) can be stored in some combination and called by one unique code phrase. For instance, a user may enter a vehicle and activate the speech recognition and control means and may simply utter his name that was previously stored as a key word (third code phrase in the above examples). In response to the key word one or more files are read that include adjustment parameters for adjusting different vehicular elements. In response to the uttered, detected and recognized name of the user and based on the read data file(s) adjustment of vehicular elements is automatically initiated and controlled (via a bus system) by the speech recognition and control means.

All previously discussed embodiments are not intended as limitations but serve as examples illustrating features and advantages of the invention. It is to be understood that some or all of the above described features can also be combined in different ways.

## Claims

1. Method for setting up automatic adjustment of at least one vehicular element comprising the steps of
recognizing a first code phrase (2) uttered by a user by a speech recognition means;
operating the at least one vehicular element (3,4) for adjustment by the user;
recognizing a second code phrase (6) uttered by the user by the speech recognition means;
upon recognition of the second code phrase storing mechanical and/or electronic operations comprised in the step of operating the at least one vehicular element for adjustment and/or adjustment parameters obtained after completion of the step of operating the at least one vehicular element for adjustment;
recognizing a third code phrase (7) uttered by the user by the speech recognition means upon completion of the step of storing the mechanical and/or electronic operations and/or the adjustment parameters; and
storing the third code phrase for identification of the stored mechanical and/or electronic operations and/or the adjustment parameters.

2. Method according to claim 1
wherein the third code phrase uttered by the user by the speech recognition means upon completion of the step of storing the mechanical and/or electronic operations and/or the adjustment parameters is recognized for a first time; and further comprising
recognizing for a second time the third code phrase uttered by the user by the speech recognition means; and
automatically operating the at least one vehicular element for adjustment in accordance with the stored mechanical and/or electronic operations and/or the adjustment parameters in response to the recognized third code phrase.

3. Method according to claim 1, wherein more than one vehicular element (3,4) is operated by the user.

4. Method according to claim 2, wherein more than one vehicular element is operated by the user and automatically in response to the recognized third code phrase.

5. Method according to one of the preceding claims, wherein the at least one vehicular element is a seat and/or a mirror and/or a heating and/or an air condition and/or an electronic audio device, in particular, a radio or a CD player, and/or a navigation system installed in the vehicle.

6. Method according to one of the claims 1 to 4, wherein the vehicular element is a navigation system and the operating for adjustment of the navigation system comprises inputting at least one destination or inputting at least one destination and calculating a route to the destination and adjustment parameters stored after completion of the step of operating the navigation system comprise the at least one input destination or the at least one input destination and the calculated route.

7. Method according to claim 6, wherein the inputting of the at least one destination comprises uttering the name of the at least one destination by the user.

8. Method according to one of the claims 1 - 4, wherein the at least one vehicular element is provided with an actuator and operated by the user by means of the actuator.

9. System for automatic adjustment of at least one vehicular element, comprising:
a speech recognition means;
a control means connected with the speech recognition means;
actuating means connected with the control means and at least one vehicular element (3,4);
a bus system connecting at least the speech recognition means and the actuating means;
wherein the speech recognition means is configured to
recognize a first code phrase (2);
open a data file and monitor the bus system in response to the recognized first code phrase;
recognize a second code phrase (6);
save to the data file monitored operations for adjustment of the at least one vehicular element and/or adjustment parameters obtained after completion of the adjustment of the at least one vehicular element in response to the recognized second code phrase;
output a prompt to a user;
recognize for a first time a third code phrase (7) uttered by the user in response to the prompt;
tag the data file with the recognized third code phrase; and to
recognize for a second time the third code phrase; and
in response to the third code phrase recognized for a second time cause the control means to operate the actuating means on the basis of the data stored in the data file.

10. System according to claim 9, wherein the at least one vehicular element is a seat and/or a mirror and/or a heating and/or an air condition and/or an electronic audio device, in particular, a radio or a CD player, and/or a navigation system installed in the vehicle.

11. System according to claim 9, wherein the vehicular element is a navigation system and the data stored in the data file comprises at least one destination and/or a calculated route to the destination.

12. Vehicle, in particular, an automobile comprising a system according to one of the claims 9 to 11.

## Patentansprüche

1. Verfahren zum Einstellen automatischer Einstellungen zumindest eines Fahrzeugelements, das die Schritte umfasst
Erkennen einer Codephrase (2), die von einem Nutzer gesprochen wird, durch eine Spracherkennungseinrichtung;
Bedienen des zumindest einen Fahrzeugelements (3, 4) zur Einstellung durch den Nutzer;
Erkennen einer zweiten Codephrase (6), die von dem Nutzer gesprochen wird, durch die Spracherkennungseinrichtung;
nach Erkennen der zweiten Codephrase Speichern mechanischer und/oder elektronischer Bedienoperationen, die in dem Schritt des Bedienens des zumindest einen Fahrzeugelements zur Einstellung enthalten sind, und/oder von Einstellungsparametern, die nach dem Beenden des Schritts des Bedienens des zumindest einen Fahrzeugelements zur Einstellung erhalten werden;
Erkennen einer dritten Codephrase (7), die von dem Nutzer nach dem Beenden des Schritts des Speicherns der mechanischen und/oder elektronischen Bedienoperationen und/oder von den Einstellungsparametern gesprochen wird, durch die Spracherkennungseinrichtung; und
Speichern der dritten Codephrase zur Identifikation der gespeicherten mechanischen und/oder elektronischen Bedienoperationen und/oder von den Einstellungsparametern.

2. Verfahren gemäß Anspruch 1,
in dem die dritten Codephrase, die von dem Nutzer nach dem Beenden des Schritts des Speicherns der mechanischen und/oder elektronischen Bedienoperationen und/oder von den Einstellungsparametern gesprochen wird, ein erstes Mal durch die Spracherkennungseinrichtung erkannt wird; und das weiterhin umfasst
ein zweites Mal Erkennen der dritten Codephrase, die von dem Nutzer gesprochen wird, durch die Spracherkennungseinrichtung; und
automatisches Bedienen des zumindest einen Fahrzeugelements zur Einstellung in Übereinstimmung mit den gespeicherten mechanischen und/oder elektronischen Bedienoperationen und/oder von den Einstellungsparametern in Reaktion auf die erkannte dritte Codephrase.

3. Verfahren gemäß Anspruch 1, in dem mehr als ein Fahrzeugelement (3, 4) von dem Nutzer bedient wird.

4. Verfahren gemäß Anspruch 2, in dem mehr als ein Fahrzeugelement von dem Nutzer und automatisch in Reaktion auf die erkannte dritte Codephrase bedient wird.

5. Verfahren gemäß einem der vorhergehenden Ansprüche, in dem das zumindest eine Fahrzeugelement ein Sitz und/oder ein Spiegel und/oder eine Heizung und/oder eine Klimaanlage und/oder eine elektronische Audioeinrichtung, insbesondere ein Radio oder ein CD-Spieler, und/oder ein Navigationssystem, das in dem Fahrzeug installiert ist, ist.

6. Verfahren gemäß einem der Ansprüche 1 bis 4, in dem das Fahrzeugelement ein Navigationssystem ist und das Bedienen für die Einstellung des Navigationssystems Eingeben zumindest eines Ziels oder Eingeben zumindest eines Ziels und Berechnen einer Route zu dem Ziel umfasst und Einstellungsparameter, die nach dem Beenden des Schritts des Bedienens des Navigationssystems gespeichert werden, das zumindest eine eingegebene Ziel oder das zumindest eine eingegebene Ziel und die berechnete Route umfassen.

7. Verfahren gemäß Anspruch 6, in dem das Eingeben des zumindest einen Ziels das Sprechen des Namens des zumindest einen Ziels durch den Nutzer umfasst.

8. Verfahren gemäß einem der Ansprüche 1 bis 4, in dem das zumindest eine Fahrzeugelement mit einem Stellmotor versehen ist und von dem Nutzer mithilfe des Stellmotors bedient wird.

9. System zur automatischen Einstellung von zumindest einem Fahrzeugelement, das umfasst
eine Spracherkennungseinrichtung;
eine Steuereinrichtung, die mit der Spracherkennungseinrichtung verbunden ist;
Bedienmittel, die mit der Steuereinrichtung und zumindest einem Fahrzeugelement (3, 4) verbunden sind;
ein Bussystem, das zumindest die Spracherkennungseinrichtung und die Bedienmittel verbindet;
wobei die Spracherkennungseinrichtung dazu ausgebildet ist,
eine erste Codephrase zu erkennen (2);
eine Datei zu öffnen und das Bussystem in Reaktion auf die erkannte erste Codephrase zu überwachen;
eine zweite Codephrase zu erkennen (6);
überwachte Bedienoperationen zur Einstellung des zumindest einen Fahrzeugelements und/oder von Einstellungsparametern, die nach dem Beenden des Schritts des Bedienens des zumindest einen Fahrzeugelements in Reaktion auf die erkannte zweite Codephrase erhalten werden, in die Datei zu speichern;
eine Aufforderung an den Nutzer auszugeben;
zum ersten Mal eine dritte Codephrase (7) zu erkennen, die von dem Nutzer in Reaktion auf die Aufforderung gesprochen wird;
die Datei mit der erkannten dritten Codephrase zu kennzeichnen, und
zum zweiten Mal die dritte Codephrase zu erkennen; und
die Steuereinrichtung in Reaktion auf die zum zweiten Mal erkannte dritte Codephrase dazu zu veranlassen, die Bedienmittel auf der Grundlage der in der Datei gespeicherten Daten zu bedienen.

10. System gemäß Anspruch 9, in dem das zumindest eine Fahrzeugelement ein Sitz und/oder ein Spiegel und/oder eine Heizung und/oder eine Klimaanlage und/oder eine elektronische Audioeinrichtung, insbesondere ein Radio oder ein CD-Spieler, und/oder ein Navigationssystem, das in dem Fahrzeug installiert ist, ist.

11. System gemäß Anspruch 9, in dem das Fahrzeugelement ein Navigationssystem ist, und die Daten, die in der Datei gespeichert sind, zumindest ein Ziel und/oder eine berechnete Route zu dem Ziel umfassen.

12. Fahrzeug, insbesondere ein Auto, das ein System gemäß einem der Ansprüche 9 bis 11 umfasst.

## Revendications

1. Procédé pour assurer l'ajustement automatique d'au moins un élément véhiculaire comprenant les étapes de
reconnaissance d'une première phrase de code (2) exprimée par un utilisateur par un moyen de reconnaissance vocale ;
utilisation du, au moins un, élément véhiculaire (3, 4) pour ajustement par l'utilisateur ;
reconnaissance d'une deuxième phrase de code (6) exprimée par l'utilisateur par le moyen de reconnaissance vocale
après la reconnaissance de la deuxième phrase de code (7), stockage d'opérations mécaniques et/ou électroniques comprises dans l'étape d'utilisation du, au moins un, élément véhiculaire pour ajustement et/ou paramètres d'ajustement obtenus après avoir procédé à l'étape d'utilisation du, au moins un, élément véhiculaire pour ajustement ;
reconnaissance d'une troisième phrase de code exprimée par l'utilisateur par le moyen de reconnaissance vocale après avoir procédé à l'étape de stockage des opérations mécaniques et/ou électroniques et/ou des paramètres d'ajustement; et
enregistrement de la troisième phrase de code pour l'identification des opérations mécaniques et/ou électroniques et/ou les paramètres d'ajustement.

2. Procédé selon la revendication 1
où la troisième phrase de code exprimée par l'utilisateur est reconnu par le moyen de reconnaissance vocale après l'étape de stockage des opérations mécaniques et/ou électroniques et/ou les paramètres d'ajustement pour une première fois ; et comprenant en outre
la reconnaissance pour une deuxième fois de la phrase de code exprimée par l'utilisateur par le moyen de reconnaissance vocale ; et
l'utilisation automatique du, au moins un, élément véhiculaire pour ajustement conforme aux opérations mécaniques et/ou électroniques enregistrées en réponse à la troisième phrase de code reconnue.

3. Procédé selon la revendication 1, où plus d'un élément véhiculaire (3,4) est utilisé par l'utilisateur.

4. Procédé selon la revendication 2, où plus d'un élément véhiculaire est utilisé par l'utilisateur et de manière automatique en réponse à la troisième phrase de code reconnue.

5. Procédé selon l'une des revendications précédentes, où le, au moins un, élément véhiculaire est un siège et/ou un miroir et/ou un radiateur et/ou une climatisation et/ou un dispositif audio électronique, en particulier, une radio ou un lecteur de CD, et/ou un système de navigation installé dans le véhicule.

6. Procédé selon l'une des revendications 1 à 4, où l'élément véhiculaire est un système de navigation et l'utilisation pour ajustement du système de navigation comprend l'entrée d'au moins une destination ou l'entrée d'au moins une destination et le calcul d'un itinéraire de destination et les paramètres d'ajustement enregistrés après que l'étape d'utilisation du système de navigation a été effectuée comprennent l'au moins une destination entrée ou l'au moins une destination entrée et l'itinéraire calculé.

7. Procédé selon la revendication 6, où l'entrée de l'au moins une destination comprend l'expression du nom de l'au moins une destination par l'utilisateur.

8. Procédé selon les revendications 1 à 4, où l'au moins un élément véhiculaire est fourni avec un actionneur et utilisé par l'utilisateur au moyen de l'actionneur.

9. Système pour l'ajustement automatique d'au moins un élément véhiculaire, comprenant :
un moyen de reconnaissance de la voix ;
un moyen de contrôle connecté avec le moyen de reconnaissance vocale ;
un moyen d'actionnement connecté avec le moyen de contrôle et au moins un élément véhiculaire (3,4) ;
un système de bus connectant au moins le moyen de reconnaissance vocale et le moyen d'actionnement ;
où le moyen de reconnaissance de la voix est configuré pour
reconnaître une première phrase de code (2) ;
ouvrir un fichier de données et surveiller le système de bus en réponse à la première phrase de code reconnue ;
reconnaître une deuxième phrase de code (6) ;
sauvegarder dans le fichier de données des opérations surveillées pour ajustement du, au moins un, élément véhiculaire et/ou de paramètres d'ajustement obtenus après l'ajustement du au moins un élément véhiculaire effectué en réponse à la deuxième phrase de code reconnue ;
sortir une demande de saisie pour un utilisateur ;
reconnaître pour une première fois une troisième phrase de code (7) exprimée par l'utilisateur en réponse à la demande de saisie ;
marquer le fichier de données de la troisième phrase de code reconnue ; et
reconnaître pour la deuxième fois la troisième phrase de code ; et
en réponse à la troisième phrase de code reconnue une deuxième fois, entraîner le moyen de contrôle à opérer les moyens d'actionnement sur la base des données enregistrées dans le fichier de données.

10. Système selon la revendication 9, où l'élément véhiculaire, au moins un, est un siège et/ou un miroir et/ou un radiateur et/ou une climatisation et/ou un dispositif audio électronique, en particulier, une radio ou un lecteur de CD, et/ou un système de navigation installé dans le véhicule.

11. Système selon la revendication 9, où l'élément véhiculaire est un système de navigation et les données enregistrées dans le fichier de données comprennent au moins une destination et/ou un itinéraire calculé vers la destination.

12. Véhicule, une automobile en particulier, comprenant un système selon l'une des revendications 9 à 11.
